(19) Europäisches Patentamt / European Patent Office / Office européen des brevets

(11) EP 2 795 527 B1

(12) EUROPEAN PATENT SPECIFICATION

(45) Date of publication and mention of the grant of the patent: **06.04.2016 Bulletin 2016/14**

(21) Application number: **12867905.7**

(22) Date of filing: **10.02.2012**

(51) Int Cl.: ***G01V 99/00*** *(2009.01)*

(86) International application number: **PCT/US2012/024651**

(87) International publication number: **WO 2013/119245 (15.08.2013 Gazette 2013/33)**

# (54) SYSTEMS AND METHODS FOR SELECTING FACIES MODEL REALIZATIONS

SYSTEME UND VERFAHREN ZUR AUSWAHL VON FAZIESMODELLVERWIRKLICHUNGEN

SYSTÈMES ET PROCÉDÉS POUR LA SÉLECTION DE RÉALISATIONS DE MODÈLE DE FACIÈS

(84) Designated Contracting States: **AL AT BE BG CH CY CZ DE DK EE ES FI FR GB GR HR HU IE IS IT LI LT LU LV MC MK MT NL NO PL PT RO RS SE SI SK SM TR**

(43) Date of publication of application: **29.10.2014 Bulletin 2014/44**

(73) Proprietor: **Landmark Graphics Corporation Houston TX 77072 (US)**

(72) Inventors:
- **YARUS, Jeffrey Houston, TX 77096 (US)**
- **MAUCEC, Marko Englewood, CO 80111 (US)**
- **CHAMBERS, Richard Yukon, OK 73099 (US)**
- **SHI, Genbao Sugar Land, TX 77479 (US)**

(74) Representative: **Hoffmann Eitle Patent- und Rechtsanwälte PartmbB Arabellastraße 30 81925 München (DE)**

(56) References cited:

**US-A1- 2006 052 938**
**US-A1- 2010 121 623**
**US-A1- 2010 332 205**
**US-A1- 2010 332 205**
**US-A1- 2011 231 164**
**US-A1- 2012 006 560**

- **Craig Calvert ET AL: "Spectral component geologic modeling: A novel approach for integrating seismic data into geologic models Read More: http://library.seg.org/doi/abs/10.1190/1.1756836", The Leading Edge, 1 May 2004 (2004-05-01), pages 466-470, XP055167474, Retrieved from the Internet: URL:http://library.seg.org/doi/pdf/10.1190/1.1756836 [retrieved on 2015-02-05]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 795 527 B1

Printed by Jouve, 75001 PARIS (FR)

## Description

### FIELD OF THE INVENTION

The present invention generally relates to selecting facies model realizations. More particularly, the invention relates to selecting facies model realizations based on the cumulative distribution function of facies net volumes.

### BACKGROUND OF THE INVENTION

Craig Calvert et al: "Spectral component geologic modeling: A novel approach for integrating seismic data into geologic models ", The Leading Edge, 1 May 2004 (2004-05-01), pages 466-470 discloses an approach for integrating seismic data into geologic models using spectral component geologic modelling.

Modem geostatistical practices often rely on uncertainty analysis to assess the statistical variance (spread) of measured data and prepare the input models for subsequent risk management workflows. Capturing model uncertainty using probabilistic (stochastic) simulation methods usually involves the generation of many equally probable scenarios and realizations of reservoir properties that best mimic the reservoir heterogeneity such as, for example, facies distribution, porosity or permeability, which may also be referred to as facies model realizations. Moreover, conditional simulation techniques are used to constrain reservoir property models with variables such as, for example, acoustic impedance (AI) from the inversion of seismic data. In this manner, a more accurate representation of spatial distribution and a more representative and unbiased statistical sampling may be achieved.

It is, however, unlikely that the constructed models of reservoir properties truly represent the actual reservoir heterogeneity. Such models often are based on many assumptions that affect different scales of the model. For example, the most influential assumptions in the geomodeling process are large-scale assumptions that affect the structural and stratigraphic model, the depositional environment, perturbations in structural surfaces or the position of faults. Other small-scale assumptions like the choice of variogram models or parameters, algorithm selection or changes to probability (or cumulative) density functions may affect only the inter-well space like varying the seed number from realization to realization. The vast variety of interfering variables therefore, makes the identification and selection of the "right" reservoir property model a cumbersome and time-consuming task, prone to subjective decisions. The state-of-the-art workflows for well placement optimization in, for example, in-fill drilling operations rely on selecting the "most probable" geological model with median impact, which is understood to generate the median (i.e. P50) dynamic reservoir simulator response in terms of recovery factor or sweep efficiency. The distribution of (litho)facies in high-resolution geological models is of fundamental importance in procedures that rank the geological uncertainty in reservoir production history matching and forecast workflows as it controls the depositional continuity throughout the reservoir and as such defines the prominent fluid paths.

### SUMMARY OF THE INVENTION

The present invention therefore, meets the above needs and overcomes one or more deficiencies in the prior art by providing systems and methods for selecting facies model realizations based on the cumulative distribution function of facies net volumes.

In one embodiment, the present invention includes a method for selecting a facies model realization, comprising: a) selecting a grid-cell or window location for a facies model realization; b) selecting a most prominent facies for facies within the facies model realization at the grid-cell or window location; c) calculating a volume comprising the selected grid-cell or window location using a computer processor; d) calculating a facies net volume based on the most prominent facies selected and the volume; e) calculating a probability density function of the facies net volume; f) calculating a cumulative distribution function of the facies net volume using the probability density function; and g) selecting the facies model realization if the cumulative distribution function for the facies net volume meets a predetermined value.

In another embodiment, the present invention includes a non-transitory program carrier device tangibly carrying computer executable instructions for selecting a facies model realization. The instructions being executable to implement: a) comprising: a) selecting a grid-cell or window location for a facies model realization; b) selecting a most prominent facies for facies within the facies modelrealization at the grid-cell or window location; c) calculating a volume comprising the selected grid-cell or window location; d) calculating a facies net volume based on the most prominent facies selected and the volume; e) calculating a probability density function of the facies net volume; f) calculating a cumulative distribution function of the facies net volume using the probability density function; and g) selecting the facies model realization if the cumulative distribution function for the facies net volume meets a predetermined value.

In yet another embodiment, the present invention includes a method for selecting a facies model realization, comprising: a) selecting a most prominent facies for facies within a facies model realization at each grid-cell or window location; b) summing the most prominent facies for each grid-cell or window location with the same (i,j) coordinates; c) calculating a volume comprising each grid-cell or window location with the same (i,j) coordinates and a different (k) coordinate using a computer processor; d) calculating a facies net volume for each volume based on the sum of the most prominent facies for each grid-cell or window location with the same (i,j) coordinates and a respective volume comprising each grid-cell or window location with the same (i,j) coordinates; e) summing the facies net volume(s); f) repeating steps a) - e) for each facies model realization; g) calculating a probability density function of the summed facies net volume(s) for all facies model realizations; h) calculating a cumulative distribution function of the summed facies net volume(s) for all facies model realizations using the probability density function; and i) selecting a facies model realization based on the cumulative distribution function of a corresponding facies net volume.

In yet another embodiment, the present invention includes a non-transitory program carrier device tangibly carrying computer executable instructions for selecting a facies model realization. The instructions being executable to implement: a) selecting a most prominent facies for facies within a facies model realization at each grid-cell or window location; b) summing the most prominent facies for each grid-cell or window location with the same (i,j) coordinates; c) calculating a volume comprising each grid-cell or window location with the same (i,j) coordinates and a different (k) coordinate; d) calculating a facies net volume for each volume based on the sum of the most prominent facies for each grid-cell or window location with the same (i,j) coordinates and a respective volume comprising each grid-cell or window location with the same (i,j) coordinates; e) summing the facies net volume(s); f) repeating steps a) - e) for each facies model realization; g) calculating a probability density function of the summed facies net volume(s) for all facies model realizations; h) calculating a cumulative distribution function of the summed facies net volume(s) for all facies model realizations using the probability density function; and i) selecting a facies model realization based on the cumulative distribution function of a corresponding facies net volume.

Additional aspects, advantages and embodiments of the invention will become apparent to those skilled in the art from the following description of the various embodiments and related drawings.

## BRIEF DESCRIPTION OF THE DRAWINGS

The present invention is described below with references to the accompanying drawings in which like elements are referenced with like reference numerals, and in which:

**FIG. 1** is a flow diagram illustrating one embodiment of a method for implementing the present invention.
**FIG. 2** illustrates the results of step **108** in **FIG. 1.**
**FIG. 3** is a flow diagram illustrating another embodiment of a method for implementing the present invention.
**FIG. 4A** illustrates an example of step **303** in **FIG. 3.**
**FIG. 4B** illustrates another example of step **303** in **FIG. 3.**
**FIG. 5** illustrates the top layer of 9 facies model realizations arbitrarily selected from a group of 400 facies model realizations.
**FIG. 6** illustrates an exemplary histogram used in step **115** of **FIG. 1,** which is based on a group of 400 facies model realizations.
**FIG. 7** illustrates a probability density function (PDF), which is calculated in step **115** of **FIG. 1** based on the histogram in **FIG. 6.**
**FIG. 8** illustrates a cumulative distribution function (CDF), which is calculated in step **116** of **FIG. 1** based on the PDF in **FIG. 7.**
**FIG. 9** illustrates the selection of three facies model realizations based on the facies net volumes selected in step **117 of FIG. 1** and the CDF in **FIG. 8.**
**FIG. 10** is a block diagram illustrating one embodiment of a system for implementing the present invention.

## DETAILED DESCRIPTION OF THE PREFERRED EMBODIMENTS

The subject matter of the present invention is described with specificity, however, the description itself is not intended to limit the scope of the invention. The subject matter thus, might also be embodied in other ways, to include different steps or combinations of steps similar to the ones described herein, in conjunction with other present or future technologies. Moreover, although the term "step" may be used herein to describe different elements of methods employed, the term should not be interpreted as implying any particular order among or between various steps herein disclosed unless otherwise expressly limited by the description to a particular order. While the present invention may be applied in the oil and gas industry, it is not limited thereto and may also be applied in other industries to achieve similar results.

The present invention includes systems and methods for selecting facies model realizations based on the cumulative distribution function of facies net volumes. The cumulative distribution function of the facies net volumes will enable identification and selection of facies model realizations corresponding to the distribution of most probable geostatistical realizations, while giving a fair consideration to the overall span of geological uncertainty. The present invention therefore, can be used in dynamic reservoir characterization workflows and includes systems and methods for: 1) unconstrained selection of facies model realizations over the entire model (e.g. geocellular grid); and 2) spatially constrained selection of facies model realizations, which is constrained within an assigned area or value of interest.

Referring now to **FIG. 1,** a flow diagram illustrates one embodiment of a method 100 for implementing the present invention.

In step **101,** the method **100** is initialized by:

- Identifying the number of facies model realizations: $n_m$ = [1...$N$,,,]
- Identifying the number of facies per facies model realization: $n_f$ = [1 ... $N_f$]
- Identifying the number of grid-cells and their locations: $i$ = [1..$I$], $j$ = [1.$J$], k = [1..$K$] in each facies model realization ($n_m$);
- Setting the sum of the most prominent facies: $\tilde{F}^{i,j}_{n_m,n_f} = 0$; and
- Setting the cumulative distribution function of facies net volumes: $\tilde{F}^{s}_{v n_f} = 0$.

In step **102,** a facies model realization ($n_m$) and the facies per facies model realization ($n_f$) are randomly or systematically selected.

In step **103,** a grid cell location for the facies model realization ($n_m$) may be randomly or systematically selected. A grid cell with coordinates (1,1,1) may be selected, for example.

In step **104,** the facies net values ($f^{i,j,k}_{n_m n_f}$) are identified for the facies per facies model realization ($n_f$) at the grid cell location selected in step **103.**

In step **105,** the most prominent facies ($\tilde{f}^{i,j,k}_{n_m n_f}$), which may be the facies with the highest net value, is selected for the facies per facies model realization ($n_f$) at the grid cell location selected in step **103.**

In step **106,** the most prominent facies are summed at the grid-cell location selected in step **103.** Thus, the sum of the most prominent facies at each grid-cell location selected in step **103** with a different (k) coordinate may be represented as:

$$\tilde{F}^{i,j}_{n_m,n_f} = \sum_{k=1}^{K} \tilde{f}^{i,j,k}_{n_m,n_f} \qquad (1)$$

In step **107,** the method **100** determines whether there is another grid-cell with the same (i, j) coordinates for the facies model realization ($n_m$). If there is another grid-cell with the same (i, j) coordinates for the facies model realization ($n_m$), then the method **100** returns to step **103** and selects another grid-cell location with the same .(i,j) coordinates and a different (k) coordinate for the facies model realization ($n_m$). If there is not another grid-cell with the same (i, j) coordinates for the facies model realization ($n_m$), then the method **100** proceeds to step **108.** In this manner, step **107** may be used for the structured and unstructured grids. Alternatively, steps **103** through **106** may be performed at the same time for each grid-cell with the same (i, j) coordinates at each (k) coordinate of the facies model realization ($n_m$).

In step **108,** a volume comprising the grid-cell locations selected in step **103** with a different (k) coordinate may be calculated by:

$$V^{i,j} = k \cdot \Delta x \cdot \Delta y \cdot \Delta z = \Delta x \cdot \Delta y \cdot Z \qquad (2)$$

where:

$$\begin{aligned} \Delta x &= x_{i+1} - x_i \\ \Delta y &= y_{j+1} - y_j \\ \Delta z &= z_{k+1} - z_k \end{aligned} \tag{3}$$

The volume illustrated in **FIG. 2,** for example, may be calculated by equation (2). Each grid-cell such as, for example, grid-cell **202,** includes the same (i, j) coordinates and a different (k) coordinate. For unstructured grids, equation (3) may resume any more generic form of volumetric calculation in combinatorial geometry.

In step **109,** the facies net volume ( $\tilde{F}^{i,j}_{v|n_m,n_f}$ ) may be calculated by:

$$\tilde{F}^{i,j}_{v|n_m,n_f} = \tilde{F}^{i,j}_{n_m,n_f} \cdot V^{i,j} \tag{4}$$

where ( $\tilde{F}^{i,j}_{n_m,n_f}$ ) is the sum of the most prominent facies from step **106** and ($V^{i,j}$) is the volume calculated in step **108.**

In step **110,** the facies net volume ( $\tilde{F}^{i,j}_{v|n_m,n_f}$ ) calculated in step **109** is stored in a 2D array.

In step **111,** the method **100** determines whether there is another grid-cell with the same (k) coordinate for the facies model realization ($n_m$). If there is another grid-cell with the same (k) coordinate for the facies model realization ($n_m$), then the method **100** returns to step **103** and selects another grid-cell location with the same (k) coordinate and different (i, j) coordinates for the facies model realization ($n_m$). If there is not another grid-cell with the same (k) coordinate for the facies model realization ($n_m$), then the method **100** proceeds to step **112.** In this manner, step **111** may be used for structured and unstructured grids. Alternatively, steps **103** through **111** may be performed at the same time for each grid-cell with the same (k) coordinate at each (i, j) coordinate of the facies model realization ($n_m$).

In step **112,** the facies net volumes ( $\tilde{F}^{i,j}_{v|n_m,n_f}$ ) stored in step **110** are summed. Thus, the sum of the facies net volumes stored in step **110** may be represented as:

$$\tilde{F}^{s}_{v|n_m,n_f} = \sum_{i=1}^{I} \sum_{j=1}^{J} \tilde{F}^{i,j}_{v|n_m,n_f} \tag{5}$$

where ( $\tilde{F}^{s}_{v|n_m,n_f}$ ) represents the facies net volume for the entire facies model realization ($n_m$) selected in step **102.**

In step **114,** the method **100** determines whether there is another facies model realization ($n_m$). If there is another facies model realization ($n_m$), then the method **100** returns to step **102** and selects another facies model realization ($n_m$) and the facies ($n_f$) per facies model realization. If there is not another facies model realization ($n_m$), then the method **100** proceeds to step **115.**

In step **115,** a probability density function ( $q$ ( $\tilde{F}^{s}_{v|n_f}$ )) or (PDF) of the summed facies net volumes ( $\tilde{F}^{s}_{v|n_f}$ ) for the total number of facies model realizations ($N_m$) is calculated from a histogram of the summed facies net volumes using techniques well known in the art. The summed facies net volumes ( $\tilde{F}^{s}_{v|n_f}$ ) may be represented as:

$$\tilde{F}^{S}_{v|n_f} = \sum_{n_m=1}^{N_m} \tilde{F}^{S}_{v|n_m,n_f} \tag{6}$$

where ( $\tilde{F}^{S}_{v|n_m,n_f}$ ) is the summed facies net volumes from step 112 for each facies model realization ($n_m$).

In step **116,** a cumulative distribution function ($Q(\tilde{F}^{s}_{v|n_f})$) or CDF is calculated using the probability density function ($q$ ($\tilde{F}^{s}_{v|n_f}$)) from step **115** and techniques well known in the art.

In step **117,** a facies net volume ($\tilde{F}^{s}_{v|n_m,n_f}$) for a single facies model realization ($n_m$) from step **112** is selected using the CDF from step **116.** For example, the facies net volume ($\tilde{F}^{s}_{v|n_m,n_f}$) selected at P50 is tied to a single facies model realization ($n_m$). If no discrete facies net volume ($\tilde{F}^{s}_{v|n_m,n_f}$) corresponding to a single facies model realization ($n_m$) can be selected, then the closest facies net volume ($\tilde{F}^{s}_{v|n_m,n_f}$), in terms of absolute difference, to P50 may be selected by solving:

$$\delta_{Fv} = \min_{n_m=1}^{N_m} | F_{v|n_m} - F_{v|P50} | \tag{7}$$

where ($\delta_{Fv}$) represents the minimized absolute difference between the facies model realization ($F_{v|n_m}$) corresponding with the closest facies net volume ($\tilde{F}^{s}_{v|n_m,n_f}$) to P50 and the facies model realization at P50 ($F_v|P50$). The facies model realization ($n_m$) at P50 is the median facies model realization for the selected facies net volume ($\tilde{F}^{s}_{v|n_m,n_f}$). In addition to the median (impact) facies model realization, the method **100** can also be used to identify the facies model realization models with the lowest impact as well as the highest impact to represent the entire space of model uncertainty over all quantiles of interest. Thus, the selection of the desired or preferred facies model realization ($n_m$) is based on the facies net volume selected in step **117** as a function of the desired or preferred CDF.

Alternatively, the method **100** in **FIG. 1** may be spatially constrained. A spatially constrained method can i) identify the 2D areas (or 3D volumes) of the model that contain significant (or highest) proportions of the facies of interest (e.g. particular sand channel); ii) be applied within the area-of-interest or volume-of-interest (AOI/VOI); iii) calculate the pore volume of the corresponding facies of interest within the AOI/VOI; and iv) rank facies model realizations based on spatially constrained results. A spatially constrained method therefore, may be used to identify facies models based on the localized distribution of facies of interest, which will eventually correspond to spatial locations relevant to, for example, selection of in-fill drilling locations in well placement. The AOI/VOI can correspond to any 2D (regular or irregular) shape or any 3D (regular or irregular) body, such as a geo-object or geo-body. Reference herein to a "window" of interest therefore, includes any 2D/3D AOI/VOI. A 2D window of interest, for example, will have dimensions ($\Re^{\tilde{X}*\tilde{Y}}$) where ($\tilde{X}$) and ($\tilde{Y}$) correspond to x- and y-dimensions of the selected window, respectively, that overlaps with the area of the facies model realization of particular interest. $\tilde{X}$ and $\tilde{Y}$ are defined as:

$$\begin{aligned} \tilde{X} &= \alpha * \Delta x \\ \tilde{Y} &= \beta * \Delta y \end{aligned} \tag{8}$$

where ($\alpha$) and ($\beta$) correspond to a number of the overlapped (i,j) grid-cells in the x-direction and in the y-direction, respectively.

Referring now to **FIG. 3,** a flow diagram illustrates another embodiment of a method 300 for implementing the present invention. The method **300** is similar to the method **100** in **FIG. 1** except that it is a spatially constrained method **300** and is applied within a predefined window that overlaps with grid-cell locations ($i_w$,$j_w$) where usually $1 \geq i_w < I$ and $1 \geq j_w < J$. Variables with the subscript (w) therefore, refer to the overlapping window of grid-cell locations ($i_w$,$j_w$) used in the method **300.**

In step **301,** the method **300** is initialized by:

- Identifying the number offacies model realizations: $n_m$ = [1...$N_m$]
- Identifying the number of facies per facies model realization: $n_f$ = [1..$N_f$]
- Identifying the number of grid-cells and their locations: $i$ = [1..$I$], $j$ = [1..$J$], $k$= [1..$K$] in each facies model realization ($n_m$);
- Setting the sum of the most prominent facies: $\tilde{F}^{i,j}_{w/n_m,n_f} = 0$; and
- Setting the cumulative distribution function of facies net volumes: $\tilde{F}^{s}_{wv/n_f} = 0$.

In step **302,** a facies model realization ($n_m$) and the facies per facies model realization *($n_f$)* are randomly or systematically selected.

In step **303,** the location of the window(s) for the facies model realization ($n_m$) may be randomly or systematically selected. In **FIG. 4A,** for example, an individual window **402** with grid-cell locations ($i_w$,$j_w$) may be selected. A plurality of windows, however, may also be selected as illustrated by windows **404, 406, 408,** and **410** in **FIG. 4B.**

In step **304,** the facies net values ( $f^{i,j,k}_{w/n_m,n_f}$ ) are identified for the facies per facies model realization ($n_f$) at the grid-cell location of the window(s) selected in step **303.**

In step **305,** the most prominent facies ( $\tilde{f}^{i,j,k}_{w/n_m,n_f}$ ), which may be the facies with the highest net value, is selected for the facies per facies model realization ($n_f$) at the grid cell location of the window(s) selected in step **303.**

In step **306,** the most prominent facies are summed at the grid-cell location of the window(s) selected in step **303.** Thus, the sum of the most prominent facies at each grid-cell location of the window(s) selected in step **303** with a different grid-cell (k) coordinate may be represented as:

$$\tilde{F}^{i,j}_{w/n_m,n_f} = \sum_{k=1}^{K} \tilde{f}^{i,j,k}_{w/n_m,n_f} \quad (9)$$

In step **307,** the method **300** determines whether there is another window with the same grid-cell (i, j) coordinates for the facies model realization ($n_m$). If there is another window with the same grid-cell (i, j) coordinates for the facies model realization ($n_m$), then the method **300** returns to step **303** and selects another grid-cell location of the window(s) with the same grid-cell (i, j) coordinates and a different grid-cell (k) coordinate for the facies model realization ($n_m$). If there is not another window with the same grid-cell (i, j) coordinates for the facies model realization ($n_m$), then the method **300** proceeds to step **308.** In this manner, step **307** may be used for the structured and unstructured grids. Alternatively, steps **303** through **306** may be performed at the same time for each window with the same grid-cell (i, j) coordinates at each grid-cell (k) coordinate of the facies model realization ($n_m$).

In step **308,** a volume comprising the grid-cell location of the window(s) selected in step **303** with a different grid-cell (k) coordinate may be calculated by:

$$\tilde{V}^{i_w,j_w} = \alpha \cdot \Delta x \cdot \beta \cdot \Delta y \cdot Z = \tilde{X} \cdot \tilde{Y} \cdot Z \quad (10)$$

where:

$$\begin{aligned} \Delta x &= x_{i+1} - x_i \\ \Delta y &= y_{j+1} - y_j \\ \Delta z &= z_{k+1} - z_k \end{aligned} \quad (11)$$

For unstructured grids, equation (11) may resume any more generic form of volumetric calculation in combinatorial geometry.

In step **309,** the facies net volume ( $\tilde{F}^{i,j}_{wv|n_m,n_f}$ ) may be calculated by:

$$\tilde{F}^{i,j}_{wv|n_m,n_f} = \tilde{F}^{i,j}_{w/n_m,n_f} \cdot \tilde{V}^{iw,jw} \tag{12}$$

where ( $\tilde{F}^{i,j}_{wv|n_m,n_f}$ ) is the sum of the most prominent facies from step **306** and ($\tilde{V}^{iw,jw}$) is the volume calculated in step **308.**

In step **310,** the facies net volume ( $\tilde{F}^{i,j}_{wv/n_m,n_f}$ ) calculated in step **309** is stored in 2D array(s).

In step **311,** the method **300** determines whether there is another window with the same grid-cell (k) coordinate for the facies model realization ($n_m$). If there is another window with the same grid-cell (k) coordinate for the facies model realization ($n_m$), then the method **300** returns to step **303** and selects another grid-cell location of the window(s) with the same grid-cell (k) coordinate and different grid-cell (i, j) coordinates for the facies model realization ($n_m$). If there is not another window with the same grid-cell (k) coordinate for the facies model realization ($n_m$), then the method **300** proceeds to step **312.** In this manner, step **311** may be used for structured and unstructured grids. Alternatively, steps **303** through **311** may be performed at the same time for each window with the same grid-cell (k) coordinate at each grid-cell (i, j) coordinate of the facies model realization ($n_m$).

In step **312,** the facies net volumes ( $\tilde{F}^{i,j}_{wv|n_m,n_f}$ ) stored in step **310** are summed. Thus, the sum of the facies net volumes stored in step **310** may be represented as:

$$\tilde{F}^{s}_{wv|n_m,n_f} = \sum_{i=1}^{I}\sum_{j=1}^{J} \tilde{F}^{i,j}_{wv|n_m,n_f} \tag{13}$$

where ( $\tilde{F}^{s}_{wv|n_m,n_f}$ ) represents the facies net volume for the entire facies model realization ($n_m$) selected in step **302.**

In step **314,** the method **300** determines whether there is another facies model realization ($n_m$). If there is another facies model realization ($n_m$), then the method **300** returns to step **302** and selects another facies model realization ($n_m$) and the facies ($n_f$) per facies model realization. If there is not another facies model realization ($n_m$), then the method **300** proceeds to step **315.**

In step **315,** a probability density function ($q$ ( $\tilde{F}^{s}_{wv|n_f}$ )) or (PDF) of the summed facies net volumes ( $\tilde{F}^{s}_{wv|n_f}$ ) for the total number of facies model realizations ($N_m$) is calculated from a histogram of the summed facies net volumes using techniques well known in the art. The summed facies net volumes may be represented as:

$$\tilde{F}^{S}_{wv|n_f} = \sum_{n_m=1}^{N_m} \tilde{F}^{S}_{wv|n_m,n_f} \tag{14}$$

where ( $\tilde{F}^{s}_{wv|n_m,n_f}$ ) is the summed facies net volumes from step **312** for each facies model realization ($n_m$).

In step **316,** a cumulative distribution function (Q( $\tilde{F}^{s}_{wv|n_f}$ )) or CDF is calculated using the probability density function ($q$ ( $\tilde{F}^{s}_{wv|n_f}$ )) from step **315** and techniques well known in the art.

In step **317,** a facies net volume ( $\tilde{F}^{s}_{wv|n_m,n_f}$ ) for a single facies model realization ($n_m$) from step **312** is selected using the CDF from step **316.** For example, the facies net volume ( $\tilde{F}^{s}_{wv|n_m,n_f}$ ) selected at P50 is tied to a single facies model realization ($n_m$). If no discrete facies net volume ( $\tilde{F}^{s}_{wv|n_m,n_f}$ ) corresponding to a single facies model realization

($n_m$) can be selected, then the closest facies net volume ($\tilde{F}^s_{wv|n_m,n_f}$), in terms of absolute difference, to P50 may be selected by solving:

$$\delta_{Fwv} = \min_{n_m=1}^{N_m} | F_{wv|n_m} - F_{wv|P50} | \quad (15)$$

where ($\delta_{Fwv}$) represents the minimized absolute difference between the facies model realization ($F_{wv}|_{n_m}$) corresponding with the closest facies net volume ($\tilde{F}^s_{wv|n_m,n_f}$) to P50 and the facies model realization at P50 ($F_{wv}|_{P50}$). The facies model realization ($n_m$) at P50 is the median facies model realization for the selected facies net volume ($\tilde{F}^s_{wv|n_m,n_f}$). In addition to the median (impact) facies model realization, the method **300** can also be used to identify the facies model realization models with the lowest impact as well as the highest impact to represent the entire space of model uncertainty over all quantiles of interest. Thus, the selection of the desired or preferred facies model realization ($n_m$) is based on the facies net volume selected in step **317** as a function of the desired or preferred CDF.

EXAMPLE

In this example of the method **100,** a synthetic model of the Brugge field was used. The stratigraphy of the Brugge field combines four different depositional environments: i) fluvial (discrete sand bodies in shale); ii) lower shore facie (contains loggers: carbonate concretions), iii) upper shore face (contains loggers: carbonate concretions); and iv) sandy shelf with irregular carbonate patches.

A group of 400 high-resolution facies model realizations of the Brugge field (211x76x56, *i.e.,* approximately 900k grid-cells) was generated using the DecisionSpace® Desktop Earth Modeling API. The top-layers of nine (9) arbitrarily selected facies model realizations are illustrated in **FIG. 5** where shale and sand are distinguished by a gray-scale.

The synthetic model of the Brugge field contains five different facies types, which are identified in Table 1 below with corresponding facies net values.

Table 1

| No. | Lithofacies name | Net value |
|---|---|---|
| 0 | Barrier sand | 0 |
| 1 | Sandstone | 0.4464 |
| 2 | Shoreface sand | 0.2321 |
| 3 | Shale | 0.1786 |
| 4 | Carbonate cemented sand | 0.1429 |

Based on Table 1, sandstone facies was selected as the most prominent facies according to step **105** in **FIG 1.** In order to calculate the facies net volume in step **109** using equation (4), grid-cell dimensions of $\Delta x$=45.315 m, $\Delta y$=21.131 m, $\Delta z$=4.526 m and k=56 (the number of vertical layers in the synthetic model) were used to calculate the volume using equation (3) in step **108** of **FIG. 1.**

A histogram of the summed facies net volumes ($\tilde{F}^s_{v|n_m,n_f}$) from step **112** is illustrated in **FIG. 6** for the group of 400 facies model realizations. Based on the histogram in **FIG. 6,** a probability density function (PDF) and a corresponding cumulative distribution function (CDF) were calculated according to steps **115** and **116** in **FIG. 1,** respectively, which are illustrated in **FIGS. 7** and **8,** respectively.

The CDF illustrated in **FIG. 8** was used to select/rank the facies model realizations with respect to the median facies model realization at P50 and the facies model realizations with the lowest and highest impact at P10 and P90, respectively.

Based on the probabilities given in Table 2 below, the corresponding facies net volumes were selected using equation (7) in step **117** of **FIG. 1.** In this example, the facies net volumes at P10, P50 and P90 correspond to facies model realizations 336, 169 and 384, respectively, which are illustrated in **FIG. 9.**

Table 2

| Probability | Facies net volume $\mathfrak{R}^{\tilde{X}*\tilde{Y}}$ |
|---|---|
| P10 | 6810 |
| P50 | 6839.33 |
| P90 | 6860.67 |

**System Description**

The present invention may be implemented through a computer-executable program of instructions, such as program modules, generally referred to software applications or application programs executed by a computer. The software may include, for example, routines, programs, objects, components, data structures, etc., that perform particular tasks or implement particular abstract data types. DecisionSpace® Desktop Earth Modeling, which is a commercial software application marketed by Landmark Graphics Corporation, may be used as an interface application to implement the present invention. The software may also cooperate with other code segments to initiate a variety of tasks in response to data received in conjunction with the source of the received data. The software may be stored and/or carried on any variety of memory such as CD-ROM, magnetic disk, bubble memory and semiconductor memory (e.g., various types of RAM or ROM). Furthermore, the software and its results may be transmitted over a variety of carrier media such as optical fiber, metallic wire, and/or through any of a variety of networks, such as the Internet.

Moreover, those skilled in the art will appreciate that the invention may be practiced with a variety of computer-system configurations, including hand-held devices, multiprocessor systems, microprocessor-based or programmable-consumer electronics, minicomputers, mainframe computers, and the like. Any number of computer-systems and computer networks are acceptable for use with the present invention. The invention may be practiced in distributed-computing environments where tasks are performed by remote-processing devices that are linked through a communications network. In a distributed-computing environment, program modules may be located in both local and remote computer-storage media including memory storage devices. The present invention may therefore, be implemented in connection with various hardware, software or a combination thereof, in a computer system or other processing system.

Referring now to **FIG. 10,** a block diagram illustrates one embodiment of a system for implementing the present invention on a computer. The system includes a computing unit, sometimes referred to as a computing system, which contains memory, application programs, a client interface, a video interface, and a processing unit. The computing unit is only one example of a suitable computing environment and is not intended to suggest any limitation as to the scope of use or functionality of the invention.

The memory primarily stores the application programs, which may also be described as program modules containing computer-executable instructions, executed by the computing unit for implementing the present invention described herein and illustrated in **FIGS.** 1 and 3. The memory therefore, includes a facies model realization selection module, which enables the methods illustrated and described in reference to **FIGS. 1.** and **3,** and integrates functionality from the remaining application programs illustrated in **FIG. 10.** The facies model realization selection module, for example, may be used to execute many of the functions described in reference to the methods **100** and **300** in **FIGS. 1** and **3,** respectively. DecisionSpace® Desktop Earth Modeling may be used for example, as an interface application to implement the facies model realization selection module and to utilize the results of the method **100** in **FIG.** 1 and the method **300** in **FIG. 3.**

Although the computing unit is shown as having a generalized memory, the computing unit typically includes a variety of computer readable media. By way of example, and not limitation, computer readable media may comprise computer storage media The computing system memory may include computer storage media in the form of volatile and/or nonvolatile memory such as a read only memory (ROM) and random access memory (RAM). A basic input/output system (BIOS), containing the basic routines that help to transfer information between elements within the computing unit, such as during start-up, is typically stored in ROM. The RAM typically contains data and/or program modules that are immediately accessible to and/or presently being operated on by the processing unit. By way of example, and not limitation, the computing unit includes an operating system, application programs, other program modules, and program data.

The components shown in the memory may also be included in other removable/non-removable, volatile/non-volatile computer storage media or they may be implemented in the computing unit through an application program interface ("API") or cloud computing, which may reside on a separate computing unit connected through a computer system or network. For example only, a hard disk drive may read from or write to non-removable, nonvolatile magnetic media, a magnetic disk drive may read from or write to a removable, non-volatile magnetic disk, and an optical disk drive may read from or write to a removable, nonvolatile optical disk such as a CD ROM or other optical media. Other removable/non-removable, volatile/non-volatile computer storage media that can be used in the exemplary operating environment may include, but are not limited to, magnetic tape cassettes, flash memory cards, digital versatile disks, digital video tape, solid state RAM, solid state ROM, and the like. The drives and their associated computer storage media discussed above provide storage of computer readable instructions, data structures, program modules and other data for the computing unit.

A client may enter commands and information into the computing unit through the client interface, which may be input devices such as a keyboard and pointing device, 5 commonly referred to as a mouse, trackball or touch pad. Input devices may include a microphone, joystick, satellite dish, scanner, or the like. These and other input devices are often connected to the processing unit through a system bus, but may be connected by other interface and bus structures, such as a parallel port or a universal serial bus (USB).

A monitor or other type of display device may be connected to the system bus via 10 an interface, such as a video interface. A graphical user interface ("GUI") may also be used with the video interface to receive instructions from the client interface and transmit instructions to the processing unit. In addition to the monitor, computers may also include other peripheral output devices such as speakers and printer, which may be connected through an output peripheral interface. 15 Although many other internal components of the computing unit are not shown, those of ordinary skill in the art will appreciate that such components and their interconnection are well known.

While the present invention has been described in connection with presently preferred embodiments, it will be understood by those skilled in the art that it is not 20 intended to limit the invention to those embodiments. It is therefore, contemplated that various alternative embodiments and modifications may be made to the disclosed embodiments without departing from the scope of the invention defined by the appended claims.

## Claims

**1.** A method for selecting a facies model realization, comprising:

a) selecting (103) a grid-cell or window location for a facies model realization;
b) selecting (105) a most prominent facies for facies within the facies model realization at the grid-cell or window location;
c) calculating (108) a volume comprising the selected grid-cell or window location using a computer processor;
d) calculating (109) a facies net volume based on the most prominent facies selected and the volume;
e) calculating (115) a probability density function of the facies net volume;
f) calculating (116) a cumulative distribution function of the facies net volume using the probability density function; and
g) selecting (117) the facies model realization if the cumulative distribution function for the facies net volume meets a predetermined value.

**2.** The method of Claim 1, further comprising:

h) repeating steps a) and b) in Claim 1 for each grid-cell or window with the same (i,j) coordinates for the facies model realization;
i) summing (106) the most prominent facies;
j) calculating (108) another volume comprising each selected grid-cell or window location with the same (i,j) coordinates and a different (k) coordinate;
k) calculating (109) another facies net volume based on the sum of the most prominent facies and the another volume;
l) repeating steps h) - k) for each grid-cell or window with the same (k) coordinate for the facies model realization;
m) summing (112) the another facies net volume(s);
n) repeating steps h) - m) for each facies model realization;
o) calculating (115) a probability density function of the summed another facies net volume(s) for all facies model realizations;
p) calculating (116) a cumulative distribution function of the summed another facies net volume(s) for all facies model realizations using the probability density function of the summed another facies net volumes for all facies model realizations; and
q) selecting (117) a facies model realization based on the cumulative distribution function of a corresponding another facies net volume.

3. The method of Claim 1 or 2, wherein a histogram of the facies net volume is used to calculate the probability density function of the facies net volume.

4. The method of Claim 2, or Claim 3 as dependent on Claim 2, wherein a histogram of the summed another facies net volume(s) for all facies model realizations is used to calculate the probability density function of the summed another facies net volume(s) for all facies model realizations.

5. The method of Claim 2 or 4, or Claim 3 as dependent on Claim 2, wherein the summed another facies net volume(s) for all facies model realizations is determined by adding the summed another facies net volume(s) for each facies model realization.

6. The method of any one of Claims 1 to 5, wherein the selection of the most prominent facies is a facies with a highest net value for the facies within the facies model realization at the grid-cell or window location.

7. A non-transitory program carrier device tangibly carrying computer executable instructions for selecting a facies model realization, the instructions being executable to implement the method according to any one of Claims 1 to 6.

8. A method for selecting a facies model realization, comprising:

a) selecting (105) a most prominent facies for facies within a facies model realization at each grid-cell or window location;
b) summing (106) the most prominent facies for each grid-cell or window location with the same (i,j) coordinates;
c) calculating (108) a volume comprising each grid-cell or window location with the same (i,j) coordinates and a different (k) coordinate using a computer processor;
d) calculating (109) a facies net volume for each volume based on the sum of the most prominent facies for each grid-cell or window location with the same (i,j) coordinates and a respective volume comprising each grid-cell or window location with the same (i,j) coordinates;
e) summing (112) the facies net volume(s);
f) repeating steps a) - e) for each facies model realization;
g) calculating (115) a probability density function of the summed facies net volume(s) for all facies model realizations;
h) calculating (116) a cumulative distribution function of the summed facies net volume(s) for all facies model realizations using the probability density function; and
i) selecting (117) a facies model realization based on the cumulative distribution function of a corresponding facies net volume.

9. The method of Claim 8, wherein a histogram of the summed facies net volume(s) for all facies model realizations is used to calculate the probability density function of the summed facies net volume(s) for all facies model realizations.

10. The method of Claim 8 or 9, wherein the summed facies net volume(s) for all facies model realizations is determined by adding the summed facies net volume(s) for each facies model realizations.

11. The method of Claim 8, 9 or 10, wherein the selection of the most prominent facies is a facies with a highest net value for the facies within the facies model realization at each grid-cell or window location.

12. A non-transitory program carrier device tangibly carrying computer executable instructions for selecting a facies model realization, the instructions being executable to implement the method according to any one of Claims 8 to 11.

## Patentansprüche

1. Verfahren zum Auswählen einer Fazies Modellrealisierung umfassend:

a) Auswählen (103) einer Gitterzellen- oder Fensteranordnung für eine Fazies Modellrealisierung;
b) Auswählen (105) einer markantesten Fazies für Fazies innerhalb der Fazies Modellrealisierung an der Gitterzellen- oder Fensteranordnung;
c) Berechnen (108) eines Volumens umfassend die ausgewählte Gitterzellen- oder Fensteranordnung unter Verwendung eines Computerprozessors;

d) Berechnen (109) eines Fazies Nettovolumens basierend auf der ausgewählten markantesten Fazies und dem Volumen;
e) Berechnen (115) einer Wahrscheinlichkeitsdichtefunktion des Fazies Nettovolumens;
f) Berechnen (116) einer kumulativen Verteilungsfunktion des Fazies Nettovolumens unter Verwendung der Wahrscheinlichkeitsdichtefunktion; und
g) Auswählen (117) der Fazies Modellrealisierung, wenn die kumulative Verteilungsfunktion für das Fazies Nettovolumen einen vorbestimmten Wert erfüllt.

**2.** Verfahren nach Anspruch 1, ferner umfassend:

h) Wiederholen der Schritte a) und b) in Anspruch 1 für jede Gitterzelle oder jedes Fenster mit denselben (i, j) Koordinaten für die Fazies Modellrealisierung;
i) Addieren (106) der markantesten Fazies;
j) Berechnen (108) eines weiteren Volumens, das jede ausgewählte Gitterzelle oder jedes Fenster mit denselben (i, j) Koordinaten und einer verschiedenen (k) Koordinate umfasst;
k) Berechnen (109) eines weiteren Fazies Nettovolumens basierend auf der Summe der markantesten Fazies und des weiteren Volumens;
l) Wiederholen der Schritte h) bis k) für jede Gitterzelle oder jedes Fenster mit derselben (k) Koordinate für die Fazies Modellrealisierung;
m) Addieren (112) des/der weiteren Fazies Nettovolumens/- volumina;
n) Wiederholen der Schritte h) bis m) für jede Fazies Modellrealisierung;
o) Berechnen (115) einer Wahrscheinlichkeitsdichtefunktion der/des addierten weiteren Fazies Nettovolumen/-volumina für alle Fazies Modellrealisierungen;
p) Berechnen (116) einer kumulativen Verteilungsfunktion des/der addierten weiteren Fazies Nettovolumens/-volumina für alle Fazies Modellrealisierungen unter Verwendung der Wahrscheinlichkeitsdichtefunktion der addierten weiteren Fazies Nettovolumina für alle Fazies Modellrealisierungen; und
q) Auswählen (117) einer Fazies Modellrealisierung basierend auf der kumulativen Verteilungsfunktion eines entsprechenden weiteren Fazies Nettovolumens.

**3.** Verfahren nach Anspruch 1 oder 2, wobei ein Histogramm des Fazies Nettovolumens verwendet wird, um die Wahrscheinlichkeitsdichtefunktion des Fazies Nettovolumens zu berechnen.

**4.** Verfahren nach Anspruch 2 oder Anspruch 3 in Abhängigkeit von Anspruch 2, wobei ein Histogramm des/der addierten weiteren Fazies Nettovolumens/-volumina für alle Fazies Modellrealisierungen verwendet wird, um die Wahrscheinlichkeitsdichtefunktion des/der addierten weiteren Fazies Nettovolumens/-volumina für alle Fazies Modellrealisierung zu berechnen.

**5.** Verfahren nach Anspruch 2 oder 4 oder Anspruch 3 in Abhängigkeit von Anspruch 2, wobei das/die addierte weitere Fazies Nettovolumen/-volumina für alle Fazies Modellrealisierungen bestimmt wird, in dem das/die addierte(n) weitere(n) Fazies Nettovolumen/-volumina für jede Fazies Modellrealisierung aufaddiert wird/werden.

**6.** Verfahren nach einem der Ansprüche 1-5, wobei die Auswahl der markantesten Fazies eine Fazies mit einem höchsten Nettowert für die Fazies innerhalb der Fazies Modellrealisierung an der Gitterzellen- oder Fensteranordnung ist.

**7.** Nicht-transitorische Programmträgervorrichtung, die physisch von einem Computer ausführbare Befehle zum Auswählen einer Fazies Modellrealisierung trägt, wobei die Befehle ausführbar sind, um das Verfahren nach einem der Ansprüche 1-6 zu implementieren.

**8.** Verfahren zum Auswählen einer Fazies Modellrealisierung umfassend:

a) Auswählen (105) einer markantesten Fazies für Fazies innerhalb einer Fazies Modellrealisierung an jeder Gitterzellen- oder Fensteranordnung;
b) Addieren (106) der markantesten Fazies für jede Gitterzellen- oder Fensteranordnung mit denselben (i, j) Koordinaten;
c) Berechnen (108) eines Volumens umfassend jede Gitterzellen- oder Fensteranordnung mit denselben (i, j) Koordinaten und einer verschiedenen (k) Koordinate unter Verwendung eines Computerprozessors;
d) Berechnen (109) eines Fazies Nettovolumens für jedes Volumen basierend auf der Summe der markantesten Fazies für jede Gitterzellen- oder Fensteranordnung mit denselben (i, j) Koordinaten und einem entsprechenden Volumen, dass jede Gitterzellen- oder Fensteranordnung mit denselben (i, j) Koordinaten;
e) Addieren (112) des/der Fazies Nettovolumens/-volumina;
f) Wiederholen der Schritte a) bis e) für jede Fazies Modellrealisierung;
g) Berechnen (115) einer Wahrscheinlichkeitsdichtefunktion des/der addierten Fazies Nettovolumens/-volumina für alle Fazies Modellrealisierungen;
h) Berechnen (116) einer kumulativen Verteilungsfunktion des/der addierten Fazies Nettovolumens/-volumina für alle Fazies Modellrealisierungen unter Verwendung der Wahrscheinlichkeitsdichtefunktion; und
i) Auswählen (117) einer Fazies Modellrealisierung, basierend auf der kumulativen Verteilungsfunktion eines entsprechenden Fazies Nettovolumens.

**9.** Verfahren nach Anspruch 8, wobei ein Histogramm der addierten Fazies Nettovolumens/-volumina für alle Fazies Modellrealisierungen verwendet wird, um die Wahrscheinlichkeitsdichtefunktion der/des addierten Fazies Nettovolumens/-volumina für alle Fazies Modellrealisierungen zu berechnen.

**10.** Verfahren nach Anspruch 8 oder 9, wobei das/die addierte(n) Fazies Nettovolumen/-volumina für alle Fazies Modellrealisierungen bestimmt wird/werden, in dem das/die addierte(n) Fazies Nettovolumen/-volumina für jede Fazies Modellrealisierung aufaddiert wird/werden.

**11.** Verfahren nach Anspruch 8, 9 oder 10, wobei die Auswahl der markantesten Fazies eine Fazies mit einem höchsten Nettowert für die Fazies innerhalb der Fazies Modellrealisierung an jeder Gitterzellen- oder Fensteranordnung ist.

**12.** Nicht-transitorische Programmträgervorrichtung, die physisch von einem Computer ausführbare Befehle zum Auswählen einer Fazies Modellrealisierung trägt, wobei die Befehle ausführbar sind, um das Verfahren nach einem der Ansprüche 8-11 zu implementieren.

## Revendications

**1.** Procédé pour sélectionner une réalisation de modèle de faciès, comprenant :

a) la sélection (103) d'un emplacement de cellule de grille ou de fenêtre pour une réalisation de modèle de faciès ;
b) la sélection (105) d'un faciès le plus proéminent pour des faciès au sein de la réalisation de modèle de faciès à l'emplacement de cellule de grille ou de fenêtre ;
c) le calcul (108) d'un volume comprenant l'emplacement de cellule de grille ou de fenêtre sélectionné en utilisant un processeur d'ordinateur ;
d) le calcul (109) d'un volume net de faciès sur la base du faciès le plus proéminent sélectionné et du volume ;
e) le calcul (115) d'une fonction de densité de probabilité du volume net de faciès ;
f) le calcul (116) d'une fonction de distribution cumulée du volume net de faciès en utilisant la fonction de densité de probabilité ; et
g) la sélection (117) de la réalisation de modèle de faciès si la fonction de distribution cumulée pour le volume net de faciès satisfait à une valeur prédéterminée.

**2.** Procédé selon la revendication 1, comprenant en outre :

h) la répétition des étapes a) et b) de la revendication 1 pour chaque cellule de grille ou fenêtre de mêmes coordonnées (i, j) pour la réalisation de modèle de faciès ;
i) la sommation (106) des faciès les plus proéminents ;
j) le calcul (108) d'un autre volume comprenant chaque emplacement de cellule de grille ou de fenêtre sélectionné de mêmes coordonnées (i, j) et une coordonnée (k) différente ;
k) le calcul (109) d'un autre volume net de faciès sur la base de la somme des faciès les plus proéminents et de l'autre volume ;
l) la répétition des étapes h) à k) pour chaque cellule de grille ou fenêtre de même coordonnée (k) pour la réalisation de modèle de faciès ;
m) la sommation (112) du ou des autres volumes nets de faciès ;
n) la répétition des étapes h) à m) pour chaque réalisation de modèle de faciès ;
o) le calcul (115) d'une fonction de densité de probabilité du ou des autres volumes nets de faciès sommés pour toutes les réalisations de modèle de faciès ;

p) le calcul (116) d'une fonction de distribution cumulée du ou des autres volumes nets de faciès sommés pour toutes les réalisations de modèle de faciès en utilisant la fonction de densité de probabilité des autres volumes nets de faciès sommés pour toutes les réalisations de modèle de faciès ; et
q) la sélection (117) d'une réalisation de modèle de faciès sur la base de la fonction de distribution cumulée d'un autre volume net de faciès correspondant.

**3.** Procédé selon la revendication 1 ou 2, dans lequel un histogramme du volume net de faciès est utilisé pour calculer la fonction de densité de probabilité du volume net de faciès.

**4.** Procédé selon la revendication 2 ou la revendication 3, lorsqu'elle dépend de la revendication 2, dans lequel un histogramme du ou des autres volumes nets de faciès sommés pour toutes les réalisations de modèle de faciès est utilisé pour calculer la fonction de densité de probabilité du ou des autres volumes nets de faciès sommés pour toutes les réalisations de modèle de faciès.

**5.** Procédé selon la revendication 2 ou 4, ou la revendication 3 lorsqu'elle dépend de la revendication 2, dans lequel le ou les autres volumes nets de faciès sommés pour toutes les réalisations de modèle de faciès est ou sont déterminés en additionnant le ou les autres volumes nets de faciès sommés pour chaque réalisation de modèle de faciès.

**6.** Procédé selon l'une quelconque des revendications 1 à 5, dans lequel la sélection du faciès le plus proéminent est un faciès de valeur nette la plus élevée pour le faciès au sein de la réalisation de modèle de faciès à l'emplacement de cellule de grille ou de fenêtre.

**7.** Dispositif support de programme non transitoire portant de façon tangible des instructions exécutables par ordinateur pour sélectionner une réalisation de modèle de faciès, les instructions étant exécutables pour mettre en oeuvre le procédé selon l'une quelconque des revendications 1 à 6.

**8.** Procédé pour sélectionner une réalisation de modèle de faciès, comprenant :

a) la sélection (105) d'un faciès le plus proéminent pour des faciès au sein d'une réalisation de modèle de faciès à chaque emplacement de cellule de grille ou de fenêtre ;
b) la sommation (106) des faciès les plus proéminents pour chaque emplacement de cellule de grille ou de fenêtre de mêmes coordonnées (i, j) ;
c) le calcul (108) d'un volume comprenant chaque emplacement de cellule de grille ou de fenêtre de mêmes coordonnées (i, j) et une coordonnée (k) différente en utilisant un processeur d'ordinateur ;
d) le calcul (109) d'un volume net de faciès pour chaque volume sur la base de la somme des faciès les plus proéminents pour chaque emplacement de cellule de grille ou de fenêtre de mêmes coordonnées (i, j) et d'un volume respectif comprenant chaque emplacement de cellule de grille ou de fenêtre de mêmes coordonnées (i, j) ;
e) la sommation (112) du ou des volumes nets de faciès ;
f) la répétition des étapes a) à e) pour chaque réalisation de modèle de faciès ;
g) le calcul (115) d'une fonction de densité de probabilité du ou des volumes nets de faciès sommé(s) pour toutes les réalisations de modèle de faciès ;
h) le calcul (116) d'une fonction de distribution cumulative du ou des des) volumes nets de faciès sommés pour toutes les réalisations de modèle de faciès en utilisant la fonction de densité de probabilité ; et
i) la sélection (117) d'une réalisation de modèle de faciès sur la base de la fonction de distribution cumulée d'un volume net de faciès correspondant.

**9.** Procédé selon la revendication 8, dans lequel un histogramme du ou des volumes nets de faciès sommés pour toutes les réalisations de modèle de faciès est utilisé pour calculer la fonction de densité de probabilité du ou des volumes nets de faciès sommés pour toutes les réalisations de modèle de faciès.

**10.** Procédé selon la revendication 8 ou 9, dans lequel le ou les volumes nets de faciès sommés pour toutes les réalisations de modèle de faciès est ou sont déterminés en additionnant le ou les volumes nets de faciès sommés pour chaque réalisation de modèle de faciès.

**11.** Procédé selon la revendication 8, 9 ou 10, dans lequel la sélection du faciès le plus proéminent est un faciès avec une valeur nette la plus élevée pour le faciès au sein de la réalisation de modèle de faciès à chaque emplacement de cellule de grille ou de fenêtre.

**12.** Dispositif support de programme non transitoire portant de façon tangible des instructions exécutables par ordinateur pour sélectionner une réalisation de modèle de faciès, les instructions étant exécutables pour mettre en oeuvre le procédé selon l'une quelconque des revendications 8 à 11.

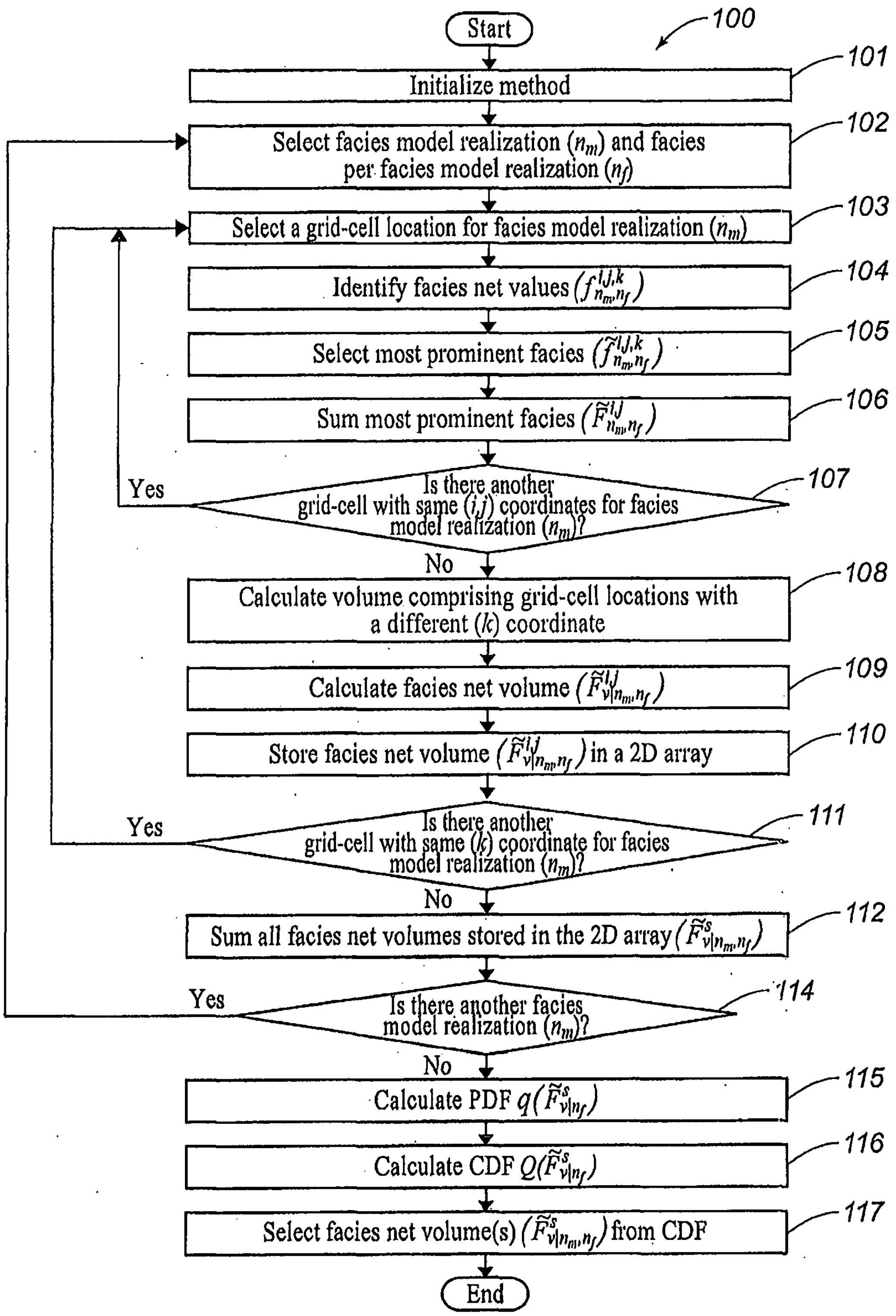
Start
100
Initialize method
101
Select facies model realization ($n_m$) and facies per facies model realization ($n_f$)
102
Select a grid-cell location for facies model realization ($n_m$)
103
Identify facies net values ($f^{i,j,k}_{n_m,n_f}$)
104
Select most prominent facies ($\tilde{f}^{i,j,k}_{n_m,n_f}$)
105
Sum most prominent facies ($\tilde{F}^{i,j}_{n_m,n_f}$)
106
Is there another grid-cell with same (i,j) coordinates for facies model realization ($n_m$)?
107
Yes
No
Calculate volume comprising grid-cell locations with a different (k) coordinate
108
Calculate facies net volume ($\tilde{F}^{i,j}_{v|n_m,n_f}$)
109
Store facies net volume ($\tilde{F}^{i,j}_{v|n_m,n_f}$) in a 2D array
110
Is there another grid-cell with same (k) coordinate for facies model realization ($n_m$)?
111
Yes
No
Sum all facies net volumes stored in the 2D array ($\tilde{F}^{s}_{v|n_m,n_f}$)
112
Is there another facies model realization ($n_m$)?
114
Yes
No
Calculate PDF $q(\tilde{F}^{s}_{v|n_f})$
115
Calculate CDF $Q(\tilde{F}^{s}_{v|n_f})$
116
Select facies net volume(s) ($\tilde{F}^{s}_{v|n_m,n_f}$) from CDF
117
End

FIG. 1

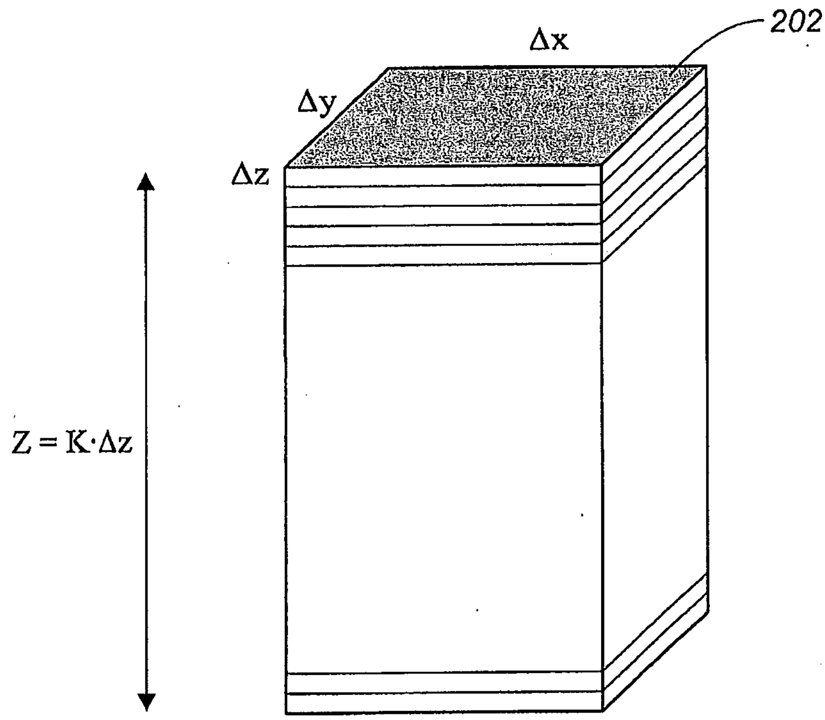


FIG. 2

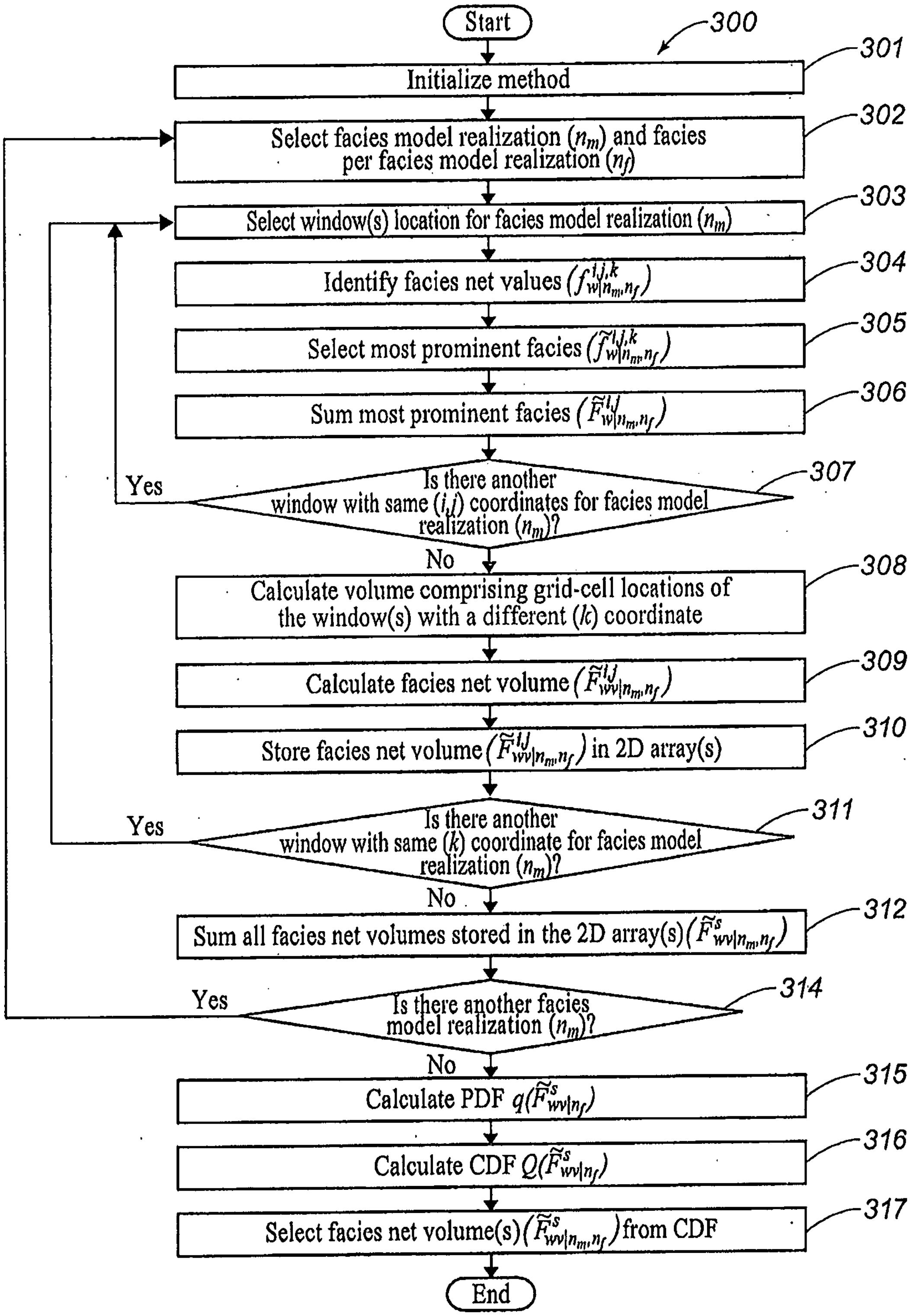
Start
300
301
Initialize method
302
Select facies model realization ($n_m$) and facies per facies model realization ($n_f$)
303
Select window(s) location for facies model realization ($n_m$)
304
Identify facies net values $(f^{i,j,k}_{w|n_m,n_f})$
305
Select most prominent facies $(\tilde{f}^{i,j,k}_{w|n_m,n_f})$
306
Sum most prominent facies $(\tilde{F}^{i,j}_{w|n_m,n_f})$
307
Is there another window with same (i,j) coordinates for facies model realization ($n_m$)?
Yes
No
308
Calculate volume comprising grid-cell locations of the window(s) with a different (k) coordinate
309
Calculate facies net volume $(\tilde{F}^{i,j}_{wv|n_m,n_f})$
310
Store facies net volume $(\tilde{F}^{i,j}_{wv|n_m,n_f})$ in 2D array(s)
311
Is there another window with same (k) coordinate for facies model realization ($n_m$)?
Yes
No
312
Sum all facies net volumes stored in the 2D array(s) $(\tilde{F}^{s}_{wv|n_m,n_f})$
314
Is there another facies model realization ($n_m$)?
Yes
No
315
Calculate PDF $q(\tilde{F}^{s}_{wv|n_f})$
316
Calculate CDF $Q(\tilde{F}^{s}_{wv|n_f})$
317
Select facies net volume(s) $(\tilde{F}^{s}_{wv|n_m,n_f})$ from CDF
End

FIG. 3

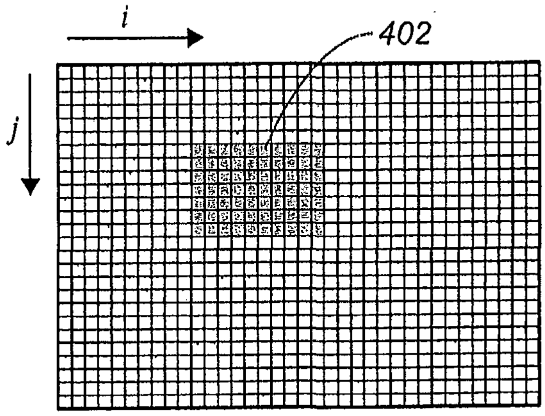


FIG. 4A

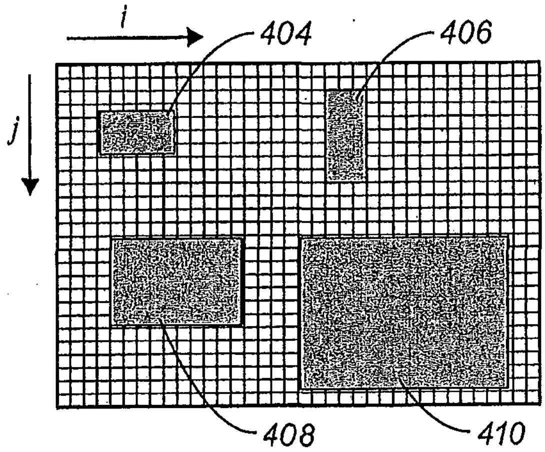


FIG. 4B

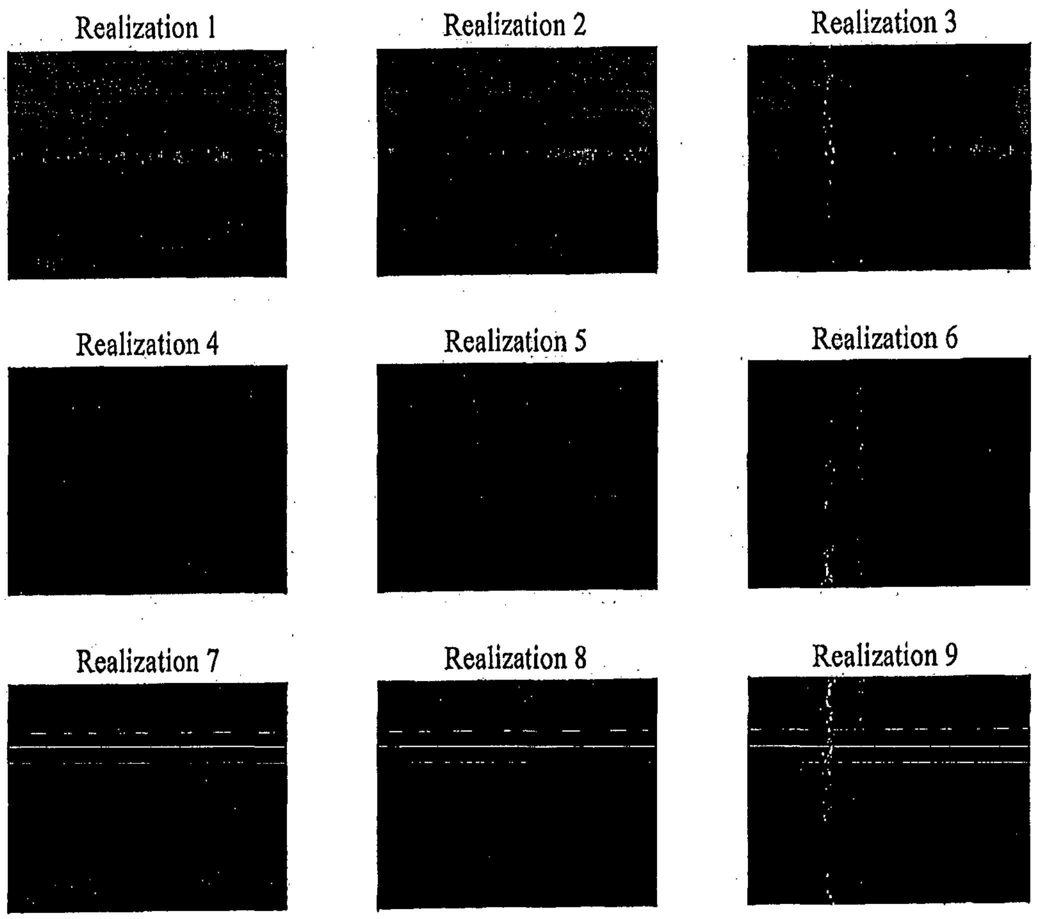


FIG. 5

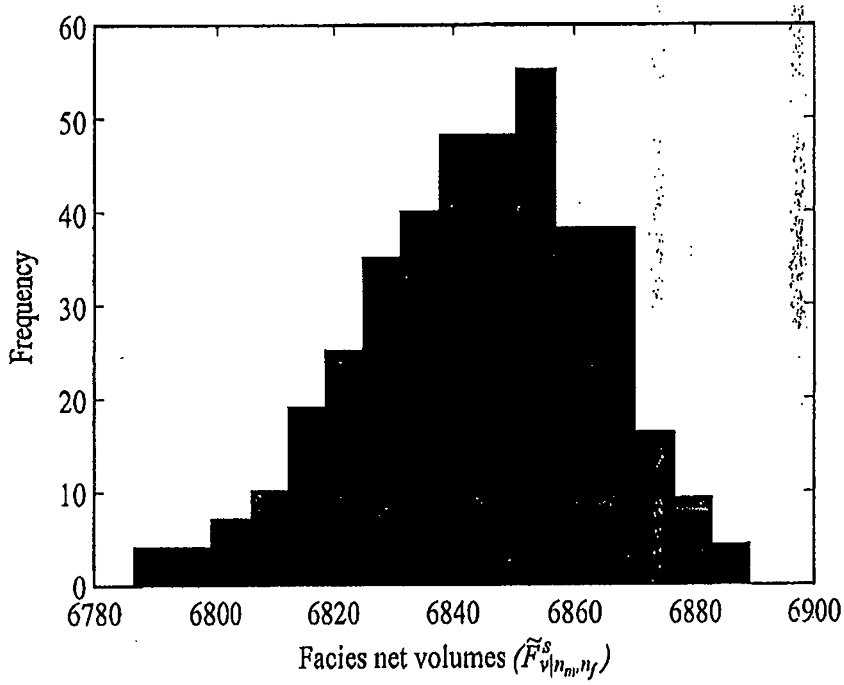

60
50
40
30
20
10
0
Frequency
6780
6800
6820
6840
6860
6880
6900
Facies net volumes ($\tilde{F}^{s}_{v|n_m,n_f}$)


FIG. 6

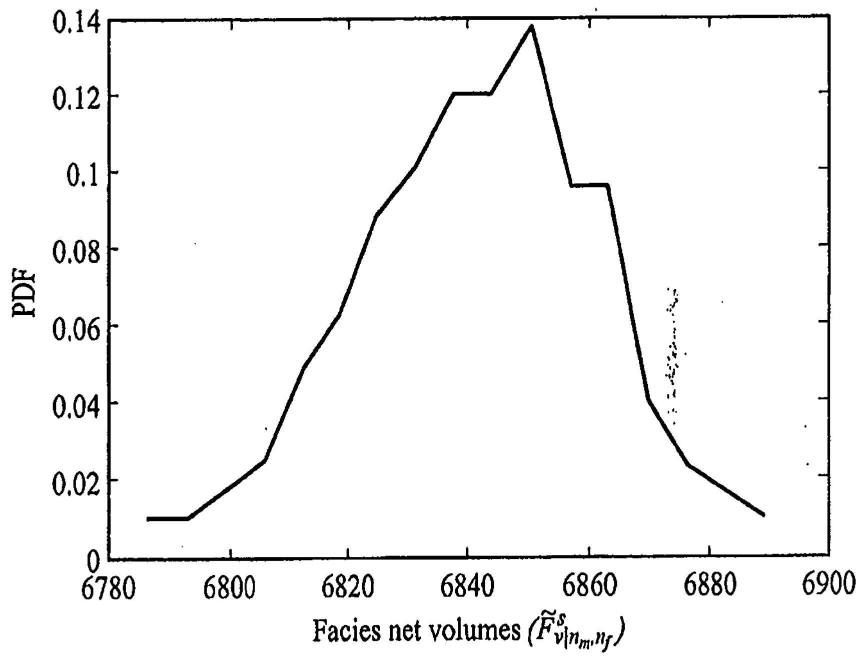

0.14
0.12
0.1
0.08
0.06
0.04
0.02
0
PDF
6780
6800
6820
6840
6860
6880
6900
Facies net volumes ($\tilde{F}^{s}_{v|n_m,n_f}$)


FIG. 7

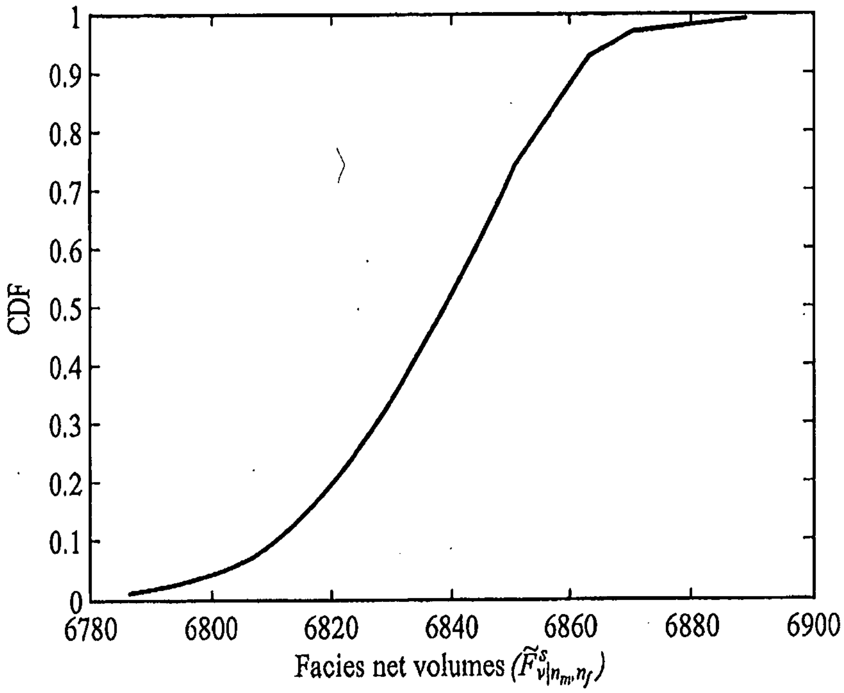
1
0.9
0.8
0.7
0.6
0.5
0.4
0.3
0.2
0.1
0
CDF
6780
6800
6820
6840
6860
6880
6900
Facies net volumes ($\widetilde{F}^{s}_{v|n_m,n_f}$)

FIG. 8

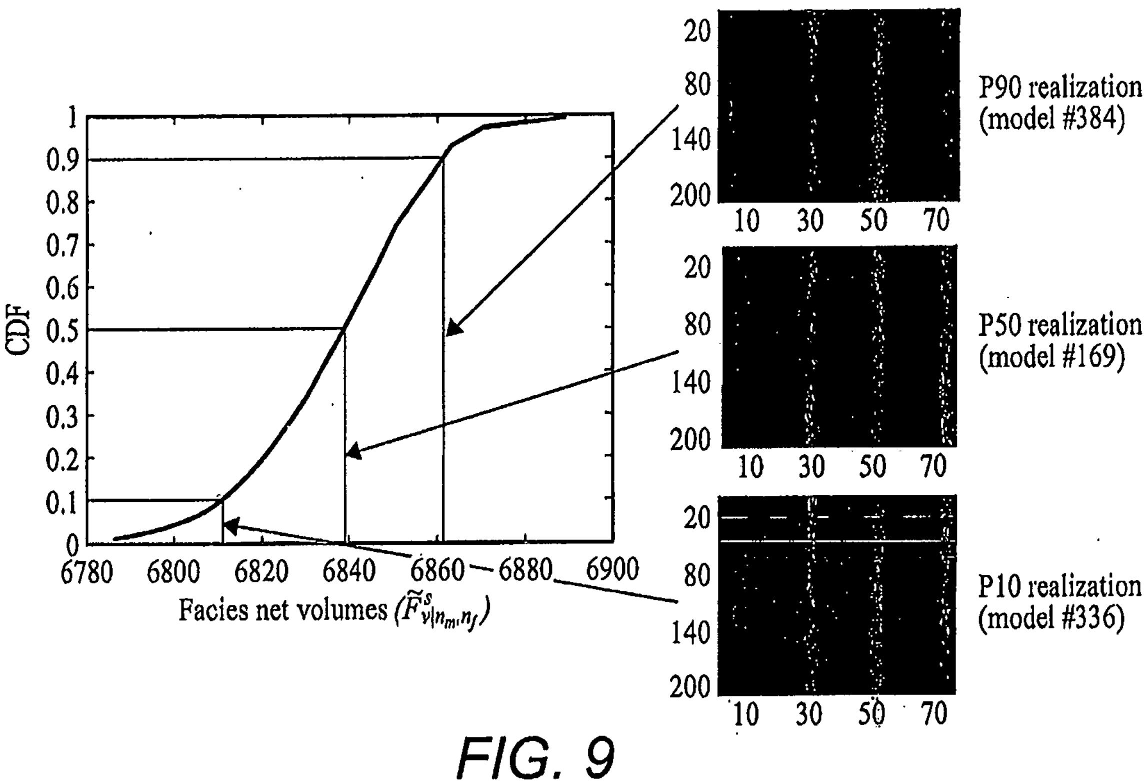
1
0.9
0.8
0.7
0.6
0.5
0.4
0.3
0.2
0.1
0
CDF
6780
6800
6820
6840
6860
6880
6900
Facies net volumes ($\widetilde{F}^{s}_{v|n_m,n_f}$)
20
80
140
200
10
30
50
70
P90 realization
(model #384)
P50 realization
(model #169)
P10 realization
(model #336)

FIG. 9

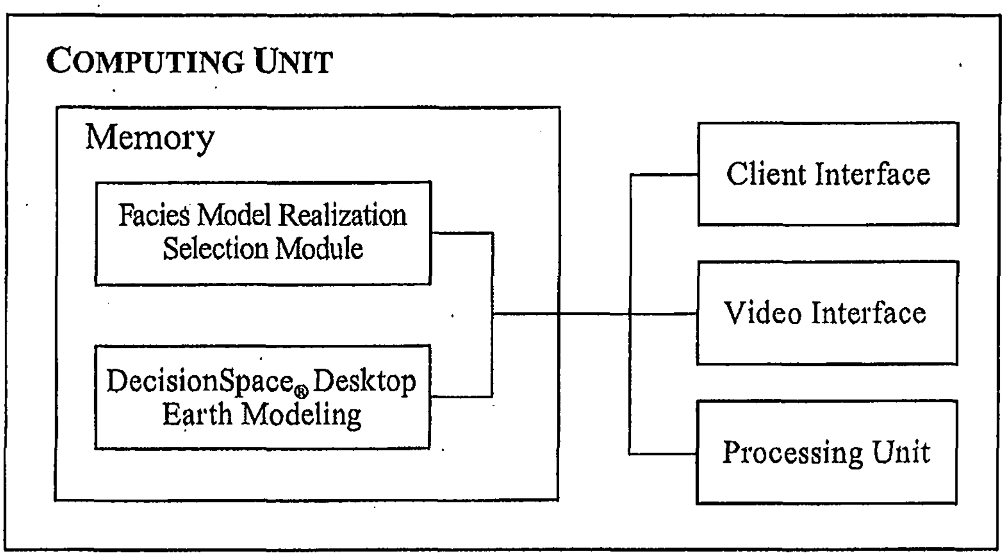
COMPUTING UNIT
Memory
Facies Model Realization Selection Module
DecisionSpace® Desktop Earth Modeling
Client Interface
Video Interface
Processing Unit

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **CRAIG CALVERT et al.** Spectral component geologic modeling: A novel approach for integrating seismic data into geologic models. *The Leading Edge,* 01 May 2004, 466-470